(19) Europäisches Patentamt
European Patent Office
Office européen des brevets

(11) Veröffentlichungsnummer : **0 164 520**
**B1**

(12) **EUROPÄISCHE PATENTSCHRIFT**

(45) Veröffentlichungstag der Patentschrift : **19.08.87**

(21) Anmeldenummer : **85104362.0**

(22) Anmeldetag : **11.04.85**

(51) Int. Cl.⁴ : **C 08 G 18/10**, C 08 G 18/28, C 08 K 5/54, C 08 L 75/04, C 09 J 3/16, C 09 D 3/72, C 09 K 3/10

# (54) Polyurethanzubereitungen mit inkorporiertem Haftvermittler.

(30) Priorität : **19.04.84 DE 3414877**

(43) Veröffentlichungstag der Anmeldung : **18.12.85 Patentblatt 85/51**

(45) Bekanntmachung des Hinweises auf die Patenterteilung : **19.08.87 Patentblatt 87/34**

(84) Benannte Vertragsstaaten : **AT BE DE FR GB IT NL**

(56) Entgegenhaltungen : **US-A- 3 632 557**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Emmerling, Winfried, Dr.**
**Lärchenweg 6**
**D-4006 Erkrath 2 (DE)**
Erfinder : **Wichelhaus, Jürgen, Dr.**
**Egenstrasse 60**
**D-5600 Wuppertal 1 (DE)**

**EP 0 164 520 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einkomponentige, lagerfähige Polyurethanzubereitungen, die zur Verbesserung der Glas- und Metallhaftung einen Haftvermittler enthalten. Polyurethan-Prepolymere mit freien Isocyanatgruppen, die bei Zutritt von Luftfeuchtigkeit aushärten, sind seit Jahren als Klebstoffe, Dichtstoffe oder Anstrichstoffe oder Isolierstoffe bekannt. Da die Haftung der ausgehärteten Polyurethane an Glas oder Metallen für viele technische Anwendungen ungenügend ist, werden seit Jahren Voranstrichmittel (Primer) eingesetzt. Dies ist insbesondere dann zweckmäßig, wenn der Verbund zwischen Polyurethan und Glas oder Metall auch nach Lagerung bei hoher Feuchtigkeit und erhöhten Temperaturen noch hohe mechanische Festigkeit zeigen soll. Als Primer haben sich hier organofunktionelle Alkylalkoxysilane, insbesondere Aminoalkyl-alkoxysilane bewährt. Eine Darstellung üblicher Primer sowie ihrer Wirkungsweise findet sich in der Monographie « Silan coupling agents » von Plueddemann, Plenum Press, New York (1982). Unter den genannten organofunktionellen Alkylalkoxysilanen sind die Aminoalkylalkoxysilane besonders bevorzugt und am weitesten verbreitet.

Wenngleich mit Hilfe dieser Verbindungen Polyurethane haftfest auf Glas oder Metall aufgebracht werden können, so wird es doch als ein großer Nachteil empfunden, daß die organofunktionellen Alkylalkyoxysilane in einem getrennten, zusätzlichen Arbeitsgang zunächst auf das zu beschichtende oder zu verklebende Substrat aufgebracht werden müssen. Versuche, den einkomponentigen Polyurethanzubereitungen, also den Diisocyanaten oder Prepolymeren, die organofunktionellen Alkylalkoxysilane direkt zuzumischen, haben bisher nicht zur Lösung des Problems geführt.

Auf der anderen Seite sind aus der US-Patentschrift 2.942.019 die Umsetzungsprodukte von (Aminoalkyl-)-alkoxysilanen mit Aldehyden und/oder Ketonen bekannt. Diese Produkte sind als Sonnenschutzmittel, UV-Absorbentien, Komplexbildner und Additive für Silikonprodukte einsetzbar und können nach der japanischen Offenlegunsschrift 80/75, 469 auch in Schmelzklebern auf Basis von Epoxiden und Polyamiden eingesetzt werden, wobei sie zu einer guten Lagerfähigkeit führen.

Vor dem Hintergrund dieses Wissens war es Aufgabe der Erfindung, Polyurethanzubereitungen (Klebstoffe, Dichtstoffe, Isolierstoffe) zu schaffen, die ohne den Voranstrich mit einem Primer hydrolysefest auf Glas haften.

Gegenstand der Erfindung sind feuchtigkeitshärtende Polyurethanzubereitungen, bestehend aus
Isocyanaten der mittleren Funktionalität 2 bis 4
Haftvermittlern und gewünschtenfalls
Beschleunigern, Füllstoffen, Lösungsmiteln, oberflächenaktiven Verbindungen und anderen Hilfsstoffen,
die dadurch gekennzeichnet sind, daß sie als Haftvermittler aldimin- und oder ketimingruppenhaltige Alkylalkoxysilane enthalten.

Zur Herstellung der in den erfindungsgemäßen Polyurethanzubereitungen verwendeten aldimin- und/oder ketimingruppenhaltigen Alkylalkoxysilane geht man von Alkylalkoxysilanen mit primären Aminogruppen aus und setzt diese in bekannter Weise mit Aldehyden und/oder Ketonen um. So können beispielsweise 3-Aminopropyl-triethoxysilan und Zimtaldehyd in einem Lösungsmittel, das mit Wasser ein Azeotrop bildet, beispielsweise Benzol oder Toluol, mehrere Stunden an einem Wasserabscheider zum Sieden erhitzt werden, wobei das Reaktionswasser ausgetragen wird und das gewünschte aldimingruppenhaltige Alkylalkoxysilan entsteht.

Nach einer ersten Ausführungsform der Erfindung werden in den Polyurethanzubereitungen aldimingruppenhaltige Alkylalkoxysilane eingesetzt. Diese leiten sich ab von Aminoalksylalkoxysilanen und aliphatischen und/oder aromatischen Aldehyden mit 2-20 C-Atomen. So können als aromatische Aldehyde zum Aufbau der aldimingruppenhaltigen Alkylalkoxysilane beispielsweise Benzaldehyd, substituierte Benzaldehyde, der Aldehyd der Zimtsäure, oder phenylsubstituierte aliphatische Aldehyde, wie z. B. 2-Phenylacetaldehyd eingesetzt werden. An aliphatischen Aldehyden können in erster Linie Acetaldehyd und seine höheren Homologen eingesetzt werden. So sind insbesondere die linearen, unverzweigten Aldehyde der Kettenlänge $C_3$, $C_4$, $C_5$, $C_6$ bevorzugt. Weitere geeignete Aldehyde leiten sich von Fettalkoholen der Kettenlänge $C_8$-$C_{20}$ oder auch von Alkanolen mit ungerader Anzahl an C-Atomen oder verzweigten Alkanolen der Kettenlänge bis $C_{20}$ ab. Bevorzugt sind Aldehyde mit 4-10 C-Atomen so beispielsweise Butyraldehyd, Benzaldehyd oder der Aldehyd des Zimtalkohols.

Nach einer weiteren Ausführungsform der Erfindung enthalten die Polyurethanzubereitungen ketimingruppenhaltige Alkylalkoxysilane. Diese leiten sich von Aminoalkylalkoxysilanen und Ketonen ab. Geeignete Ketone weisen 3-14 C-Atome auf. So können ketimingruppenhaltige Alkylalkoxysilane auf Basis Aceton, Butanon, Pentanon, Hexanon, Cyclohexanon oder Cyclododecanon hergestellt werden. Weiterhin geeignet sind aber auch aromatische Ketone wie Acetophenon. Vorzugsweise leiten sich die ketimingruppenhaltigen Alkylalkoxysilane von Ketonen mit 6-12 C-Atomen, also beispielsweise Cyclohexanon oder von Methylisobutylketon ab.

Die in den erfindungsgemäßen Polyurethanzubereitungen eingesetzten aldimin- bzw. ketimingruppenhaltigen Alkylalkoxysilane werden aus den genannten Aldehyden bzw. Ketonen unter an sich bekannten Bedingungen durch Umsetzen mit (Aminoalkyl)-alkoxysilanen hergestellt. Geeignete Reaktionsbedingungen sind beispielsweise in der US-Patenschrift 2.942.019 beschrieben. Üblicherweise

werden die Aldehyde bzw. Ketone mit dem (Aminoalkyl)-alkoxysilan in einem organischem Lösungsmittel zum Sieden erhitzt, wobei das Reaktionswasser als azeotrop abdestilliert wird. Es werden hierbei die üblicherweise als Vorprimer bei der Verklebung von Polyurethanen verwendeten (Aminoalkyl)-alkoxysilane bevorzugt eingesetzt. Geeignete (Aminoalkyl)-alkoxysilane sind Silanverbindungen, bei denen das Silicium als Zentralatom mit mindestens einem Alkylrest substituiert ist, der eine $NH_2$-Gruppe trägt. Dieser Alkylrest sollte eine Kettenlänge von 2-6 C-Atome haben. Er kann dabei, wenn er mehr als 4 C-Atome enthält, verzweigt sein. Weiterhin können die (Aminoalkyl)-alkoxysilane gewünschtenfalls eine unsubstituierte Alkylgruppe mit bis zu 10 C-Atomen, beispielsweise eine Methyl-, Ethyl-, Propyl-, Butyl-, Hexyl-, Octyl- oder Decylgruppe aufweisen. Für die Verwendbarkeit als Primer ist es schließlich ausschlaggebend, daß zumindest 2 Substituenten am Silicium Alkoxygruppen sind. Es sind jedoch auch Verbindungen mit 3 Alkoxygruppen und 1 Aminoalkylgruppe denkbar und in manchen Anwendungen bevorzugt. Die Alkoxygruppen leiten sich von Alkoholen mit einem bis zu 8 C-Atomen, vorzugsweise jedoch von Methanol, Ethanol, Propanol ab. Dabei können die Alkoxygruppen bei einer Kettenlänge von $C_3$ und größer auch verzweigt oder cyclisch sein.

Erfindungsgemäß ist es bevorzugt die folgenden Aminoalkylalkoxysilane zu aldimin- bzw. ketimingruppenhaltigen Alkylalkoxysilane umzusetzen :

$(CH_3O)_3\ Si-CH_2-CH_2 - NH_2$

$(CH_3O)_3\ Si-CH_2-CH_2-CH_2 - NH_2$

$(CH_3O)_2\ Si-CH_2-CH_2 - NH_2$
$\qquad\qquad |$
$\qquad\quad CH_3$

$(CH_3O)_2\ Si-CH_2-CH_2-CH_2-NH_2$
$\qquad\qquad |$
$\qquad\quad CH_3$

$(C_2H_5O)_3\ Si-CH_2-CH_2 - NH_2$

$(C_2H_5O)_3\ Si-CH_2-CH_2-CH_2 - NH_2$

$(C_2H_5O)_2\ Si-CH_2-CH_2 - NH_2$
$\qquad\qquad |$
$\qquad\quad CH_3$

$(C_2H_5O)_2\ Si - CH_2-CH_2-CH_2 - NH_2$
$\qquad\qquad |$
$\qquad\quad CH_3$

Die erfindungsgemäß eingesetzten aldimin- und/oder ketimingruppenhaltige Aminoalkylalkoxysilane werden in Mengen von 8-0,1 Gew.-%, bezogen auf Diisocyanat oder Polyurethan-Prepolymer, eingesetzt. Bevorzugt ist die Verwendung von 0,2-2 Gew.-%. Es werden jedoch vielfach günstige Ergebnisse mit 0,5-1,5 Gew.-% erzielt.

Nach einer besonders bevorzugten Ausführungsform der Erfindung werden neben den aldimin- bzw. ketimingruppenhaltigen Alkylalkoxysilane als Aktivatoren Carbonsäuren oder vorzugsweise deren Anhydride eingesetzt. So tritt eine deutliche Verbesserung der Haftwerte ein, wenn 1 bis 10 Gew.-%, vorzugsweise 4-6 Gew.-%, bezogen auf das Gewicht der aldimin- und/oder der ketimingruppenhaltigen Alkylalkoxysilane, an Essigsäureanhydrid, Phthalsäureanhydrid oder Anhydriden substituierter Phthalsäuren, z. B. dem Anhydrid der 4-Methyl-hexahydrophthalsäure zugesetzt werden. Geeignet sind hier insbesondere Anhydride aliphatischer Carbonsäuren, wobei cyclische wie nicht-cyclische Anhydride eingesetzt werden können.

Die erfindungsgemäßen Polyurethanzubereitungen enthalten als Hauptbestandteil mehrfunktionelle Isocyanate und/oder Polyurethan-Prepolymere. Geeignet sind hier sowohl aromatische als auch aliphatische, monocyclische wie polycyclische, mehrfunktionelle Isocyanatverbindungen. So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen größer als 2. Ein weiteres geeignetes aromatisches Diisocyanat ist Xylylendiisocyanat. Darüber hinaus kann eine Vielzahl aliphatischer Isocyanate der Funktionalität 2 und höher eingesetzt werden. Beispiele

sind hier Isophorondiisocyanat und Dicyclohexylmethandiisocyanat als cyclische aliphatische Diisocyanate. Weitere Beispiele sind aliphatische, geradkettige Diisocyanate, wie sie durch Phosgenisierung von Diaminen gewonnen werden, z. B. Tetramethylendiisocyanat oder Hexamethylendiisocyanat.

Nach einer bevorzugten Ausführungsform der Erfindung werden anstatt der mehrfunktionellen Isocyanatverbindungen Polyurethan-Prepolymere eingesetzt. Unter Prepolymeren werden hier die Addukte eines Überschusses mehrfunktioneller Isocyanate an mehrfunktionelle Alkohole, z. B. solche der Funktionalität 2 bis 4, etwa die Umsetzungsprodukte eines der vorg. aromatischen oder aliphatischen Diisocyanate mit Ethylenglykol, Propylenglykol, Glycerin, Trimethylolpropan oder Pentaerythrit verstanden. Auch Umsetzungsprodukte von Diisocyanaten mit Polyetherpolyolen, z. B. Polyetherpolyolen auf Basis Polyethylenoxid oder auf Basis Polypropylenoxid können als Prepolymere verwendet werden. Bevorzugt sind Polyurethan-Prepolymere auf Basis von Polyetherpolyolen mit Molgewichten zwischen 200 und 10 000, insbesondere 500 und 3 000. Dem Polyurethan-Fachmann sind eine große Anzahl derartiger Polyetherpolyole bekannt ; sie werden von zahlreichen Herstellern angeboten und über ihr Molekulargewicht (Zahlenmittel), das aus Endgruppenbestimmungen errechenbar ist, charakterisiert. Weitere geeignete Polyetherpolyole sind Polyetherpolyole auf Basis Polytetrahydrofuran.

Anstelle von Polyetherpolyole können auch Polyesterpolyole eingesetzt werden. Geeignete Polyesterpolyole sind Umsetzungsprodukte mehrfunktioneller Säuren mit merhrfunktionellen Alkoholen, beispielsweise Polyester auf Basis aliphatischer und/oder aromatischer Dicarbonsäuren und mehrfunktioneller Alkohole der Funktionalität 2-4. So können eingesetzt werden Polyester aus Adipinsäure, Sebacinsäure, Phthalsäure Hydrophthalsäure und/oder Trimellitsäure einerseits und Ethylenglykol, Propylenglykol, Neopentylglykol, Hexanglykol, Glycerin und/oder Trimethylolpropan andererseits. Geeignet sind insbesdondere Polyesterpolyole mit Molekulargewicht (Zahlenmitte) zwischen 500 und 5 000, insbesondere zwischen 600 und 2 000. Weitere geeignete Polyesterpolyole sind die Umsetzungsprodukte von Caprolacton mit Alkoholen der Funktionalität 2-4, so beispielsweise das Additionsprodukt von 1-5 mol Caprolacton an 1 mol Ethylenglykol, Propylenglykol, Glycerin und/oder Trimethylolpropan.

Eine weitere geeignete Klasse mehrfunktioneller Alkohole sind die Butadienole: Hierbei handelt es sich um Oligomere auf Basis Butadien, die als Endgruppen OH-Gruppen aufweisen. Geeignet sind hier Produkte im Molekulargewichtsbereich 200-4 000, insbesondere 500-2 000.

Bei der Herstellung der Polyurethan-Prepolymeren ist das Verhältnis von OH-Gruppen der Alkoholkomponente zu Isocyanatgruppen von Bedeutung. Dieses liegt im allgemeinen zwischen 1 : 3 und 1 : 11. Dabei werden mit höheren Isocyanatüberschüssen eher niedrigviskose Polyurethan-Prepolymere erhalten während niedere Isocyanatüberschüsse hochviskose, meist nur noch spachtelbare Zubereitungen liefern.

Es ist dem Polyurethan-Fachmann bekannt, daß die Vernetzungsdichte und damit Härte und Sprödigkeit der Polyurethane mit der Funktionalität der Isocyanatkomponente oder auch des Polyols zunimmt. Es sei hier auf die allgemeine Fachliteratur verwiesen, z. B. auf die Monographie von Saunders und Frisch « Polyurethanes, Chemistry and Technology », Band XVI der Serie High Polymers « Interscience Publishers » New York — London, Teil I (1962) und Teil II (1964).

Die erfindungsgemäßen Polyurethanzubereitungen können weiterhin verschiedene Hilfsstoffe enthalten. Verwendet werden können hier z. B. Füllstoffe. Als Füllstoffe geeignet sind gegenüber Isocyanaten nicht-reaktive, anorganische Verbindungen wie z. B. Kreide oder Kalkmehl, gefällte und/oder pyrogene Kieselsäuren, Zeolithe, Bentonite, gemahlene Mineralien sowie andere dem auf dem Arbeitsgebiet tätigen Fachmann bekante anorganische Füllstoffe. Weiterhin können auch organische Füllstoffe verwendet werden, insbesondere Faserkurzschnitte und anderes. Für manche Anwendungen sind Füllstoffe bevorzugt, die den Zubereitungen Thixotropie verleihen, so beispielsweise quellbare Kunststoffe insbesondere PVC.

Außer den genannten Verbindungen können die erfindungsgemäßen Polyurethanzubereitungen noch weitere Hilfsstoffe, beispielsweise Lösungsmittel enthalten. Geeignet sind Lösungsmittel, die ihrerseits nicht mit Isocyanatgruppen reagieren, so z. B. halogenierte Kohlenwasserstoffe, Ester, Ketone, aromatische Kohlenwasserstoffe u. a. Auch Weichmacher, Flammschutzmittel, Verzögerer, Farbstoffe und Alterungsschutzmittel, wie sie in Polyurethan-Klebstoffen und Dichtmassen bekannt sind, können mit eingearbeitet werden.

Für manche Anwendung ist es wünschenswert, den erfindungsgemäßen Polyurethanzubereitungen Schaumstabilisatoren zuzusetzen. Als Schaumstabilisatoren können sogenannte Silikotenside verwendet werden. Es sind dies Blockcopolymere, die aus einem Polysiloxanblock und einem oder mehreren Polyoxyethylen- und/oder Polyoxypropylenblöcken aufgebaut sind. Die erfindungsgemäßen Polyurethanzubereitungen können weiterhin flammhemmende und weichmachende Zusätze enthalten. Gängig sind Phosphor- und/oder Halogenatome enthaltende Verbindungen, wie Trikresylphosphat, Diphenylkresylphosphat, Tris-2-chlor-ethylphosphat, Tris-2-chlorpropylphosphat und Tris-2,3-dibrompropylphosphat. Zusätzlich können Flammschutzmittel verwendet werden, z. B. Chlorparaffine, Halogenphosphide, Ammoniumphosphat und halogen- und phosphorhaltige Harze. Als weitere Zusätze sind für manche Anwendungen Weichmacher von Bedeutung. Geeignet sind hier beispielsweise Ester der Phthalsäure oder Ester langkettiger Dicarbonsäuren, beispielsweise Sebacinsäure-oder Azelainsäureester. Auch sogenannte Epoxidweichmacher, z. B. epoxydierte Fettsäurederivate können hier eingesetzt werden.

Weitere mögliche Zusätze sind basische Beschleuniger. Diese sollten nicht verwendet werden, wenn

Carbonsäure-anhydride als Beschleuniger eingesetzt werden. Basische Beschleuniger sind beispielsweise tertiäre Basen wie Bis-(N,N,-dimethylamino)-diethylether, Dimethylamino-cyclohexan, N,N-Dimethylbenzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxyethyl)-amin und Dicarbonsäuren. Ein weiterer wichtiger Beschleuniger ist das 1,4-Diamino-bicyclo-(2.2.2)-octan. Ferner können nicht-basische Substanzen als Beschleuniger verwendet werden. Hier seien Metallverbindungen genannt, beispielsweise Eisenpentacarbonyl, Nickeltetracarbonyl, Eisenacetylacetonat sowie Zinn-(II)-(2-ethylhexoat), Dibutylzinndilaurat oder Molybdänglykolat.

Die erfindungsgemäßen Polyurethanzubereitungen können auf beliebige Substrate aufgebracht werden. Auf Glas und Metallen, wie beispielsweise Aluminium entstehen Verbunde, die in ihrer Hydrolysefestigkeit ansonsten nur auf zweikomponentigen Wege erreicht werden, d. h. durch Voranstrich mit einem Aminoalkylalkoxysilan und anschließender Auftragung eines Polyurethan-Prepolymeren. Dem Fachmann wird damit die Möglichkeit eröffnet, diese mit Polyurethanzubereitungen ansonsten nur schwierig zu beschichtenden Substrate in einfacher Weise zu verarbeiten. Dies zeigen die folgenden Beispiele.

## Beispiele

### Beispiel 1

79,3 g Isobutyraldehyd (1,1 mol) wurden mit 1,5 g p-Toluolsulfonsäure in 200 ml Cyclohexan vorgelegt. Dazu wurde in 30 Minuten bei maximal 50 °C 222,2 g 3-Aminopropyltriethoxysilan (1 mol) zugetropft. Anschließend wurde am Wasserabscheider erhitzt. Nach 3 Stunden war die theoretische Menge $H_2O$ (18 g) abgespalten. Nach Abziehen von Cyclohexan wurde das Reaktionsprodukt im Ölpumpenvakuum destilliert.

| | |
|---|---|
| $Kp_{1,3}$ : 120 °C | Ausbeute : 87 % |
| C = 55,9 % | theor. : 56,7 % |
| H = 10,7 % | 10,5 % |
| N = 4,8 % | 5,1 % |

### Beispiel 2

Unter den Bedingungen von Beispiel 1 wurden 116,7 g Benzaldehyd (1,1 mol) und 222,2 g Aminopropyltriethoxysilan (1 mol) zu einem Aldimin umgesetzt.

| | |
|---|---|
| $Kp_1$ : 160-162 °C | Ausbeute : 76 % |
| C = 61,8 % | theor. : 62,1 % |
| H = 8,3 % | 8,7 % |
| N = 4,4 % | 4,5 % |

### Beispiel 3

Unter den Bedingungen von Beispiel 1 wurden 107,9 g Cyclohexanon (1,1 mol) und 222,2 g Aminopropyltriethoxysilan (1 mol) zu einem Ketimin umgesetzt.

| | |
|---|---|
| $Kp_5$ : 190 °C | Ausbeute : 22 % |
| C = 61,0 % | theor. : 59,8 % |
| H = 10,1 % | 10,3 % |
| N = 4,8 % | 4,7 % |

### Beispiel 4

Unter den Bedingungen von Beispiel 1 wurden 145,4 g Zimtaldehyd (1,1 mol) und 222,2 g Aminopropyltriethoxysilan (1 mol) zu einem Aldimin umgesetzt.

| | |
|---|---|
| $Kp_1$ : 190 °C | Ausbeute : 37 % |
| C = 63,3 % | theor. : 64,5 % |
| H = 8,2 % | 8,6 % |
| N = 4,2 % | 4,2 % |

### Beispiel 5

Viskositäten (in mPas)

A) des verwendeten PUR-Prepolymeren aus 100 Tl. Diphenylmethandiisocyanat, 354 Tl. Polypropylenglykol (MG 2000) und 1,8 Tl. Trimethylolpropan bei 3,6 % freien NCO-Gruppen
B) einer Mischung von A mit 1 % der Primerderivate aus Beispiel 1
C) einer Mischung von A mit 1 % unverkapptem Aminoalkyltriethoxysilan

Tabelle 1

| | A | B | C |
|---|---|---|---|
| nach dem Vermischen | 31000 | 32000 | 37000 |
| nach 1 Tag | 34000 | 36000 | 57000 |
| nach 1 Woche | 36500 | 39500 | 57000 |
| nach 2 Wochen | 38750 | 43750 | 59500 |
| nach 3 Wochen | 40250 | 45500 | 60000 |
| nach 4 Wochen | 39250 | 44750 | 60500 |

Beispiel 6

Einem PUR-Prepolymeren, hergestellt aus 100 Tl. Diphenylmethandiisocyanat, 354 Tl. Polypropylenglykol (MG 2000) und 1,8 Tl. Trimethylolpropan, das 3,6 % an freien NCO-Gruppen enthielt, wurden Mengen zwischen 0,2 % und 2 % des Primerderivats aus Beispiel 1 zugemischt.

Die Verklebung wurde mit Al-Plättchen (25 × 100 mm) durchgeführt, die vorher mit Methylenchlorid 2 × 15 min im Ultraschallbad gereinigt und entfettet wurden. Die verklebte Fläche betrug 25 × 10 mm. Als Vergleich wurden die Al/Al-Verklebungen unter den oben beschriebenen Bedingungen ohne den Zusatz eines Primers durchgeführt. Die Zugscherfestigkeiten unter verschiedenen Bedingungen sind in Tabelle 2 zusammengestellt.

Tabelle 2

Zugemischte Menge des Primerderivats aus Beispiel 1

| | A 0,2% | B 0,5% | C 1% | D 2% | E - |
|---|---|---|---|---|---|
| Zugscher-festigkeit (N/cm$^2$) nach Aushärtung | 100 | 150 | 180 | 200 | 110 |
| 1 Tag Wasserlagerung bei RT | 130 | 130 | 130 | 140 | 83 |
| 8 Std. Wasserlagerung bei 100°C | 150 | 200 | 230 | 200 | 50 |

Beispiel 7

Einem PUR-Prepolymer wie in Beispiel 6 wurden Mengen zwischen 0,2 % und 2 % des Primerderivates aus Beispiel 2 zugemischt. Die Verklebungen wurden wie in Beispiel 6 durchgeführt. Die Zugscherfestigkeiten unter verschiedenen Bedingungen sind in Tabelle 3 zusammengestellt.

Tabelle 3

Zugemischte Menge des Primerderivats aus Beispiel 2

| | A 0,2% | B 0,5% | C 1% | D 2% | E - |
|---|---|---|---|---|---|
| Zugscherfestigkeit ($N/cm^2$) nach Aushärtung | 180 | 160 | 160 | 150 | 110 |
| 1 Tag Wasserlagerung bei RT | 160 | 160 | 140 | 150 | 83 |
| 8 Std. Wasserlagerung bei 100°C | 200 | 210 | 230 | 290 | 50 |

Beispiel 8

Es wurde eine Verklebung hergestellt wie in Beispiel 6 (Primerderivat aus Beispiel 1). Zusätzlich wurden 6 % 4-Methyl-hexahydrophthalsäureanhydrid, bezogen auf die Menge des Primers, zugesetzt. Die Zugscherfestigkeiten unter verschiedenen Bedingungen sind in Tabelle 4 zusammengestellt.

Tabelle 4

Zugemischte Menge des Primerderivats aus Beispiel 1 + 6 % Anhydrid

| | A | B | C | D | E |
|---|---|---|---|---|---|
| Zugscherfestigkeit ($N/cm^2$) nach Aushärtung | 170 | 250 | 210 | 210 | 110 |
| 1 Tag Wasserlagerung bei RT | 140 | 180 | 170 | 150 | 83 |
| 8 Std. Wasserlagerung bei 100°C | 220 | 190 | 290 | 290 | 50 |

**Patentansprüche**

1. Feuchtigkeitshärtende Polyurethanzubereitungen, bestehend aus
Isocyanaten der mittleren Funktionalität 2 bis 4
Haftvermittlern und gewünschtenfalls
Beschleunigern, Füllstoffen, Lösungsmitteln, oberflächenaktiven Verbindungen und anderen Hilfsstoffen,
dadurch gekennzeichnet, daß als Haftsvermittler aldimin- und/oder ketimingruppenhaltige Alkylalkoxysilane enthalten sind.

2. Feuchtigkeitshärtende Polyurethanzubereitungen nach Anspruch 1, dadurch gekennzeichnet, daß die aldimingruppenhaltigen Alkylalkoxysilane sich von aliphatischen und/oder aromatischen Aldehyden mit 2 bis 20 C-Atomen, insbesondere mit 4-10 C-Atomen ableiten.

3. Feuchtigkeitshärtende Polyurethanzubereitungen nach Anspruch 1, dadurch gekennzeichnet, daß sich die ketimingruppenhaltigen Alkylalkoxysilane von aliphatischen und/oder aromatischen Ketonen mit 3-14 C-Atomen, vorzugsweise 6-12 C-Atomen ableiten.

4. Feuchtigkeitshärtende Polyurethanzubereitungen nach den Ansprüchen 1-3, dadurch gekennzeichnet, daß die aldimin- und/oder ketimingruppenhaltigen Alkylalkoxysilane an Silicium die folgenden Gruppen aufweisen : ein- oder gewünschtenfalls zwei Alkylreste der Kettenlänge $C_2$-$C_6$, substituiert mit mindestens einer Aldimin- und/oder Ketimingruppe, gewünschtenfalls einen unsubstituierten Alkylrest mit 1-10 C-Atomen und 2 oder 3 Alkoxygruppen mit 1-8, vorzugsweise 1-3 C-Atomen.

5. Feuchtigkeitshärtende Polyurethanzubereitungen nach den Ansprüchen 1-4, dadurch gekennzeichnet, daß die Menge der aldimin- und/oder ketimingruppenhaltigen Alkylalkoxysilane 0,1-8 Gew.-%, vorzugsweise 0,2-2 Gew.-%, bezogen auf Diisocyanat oder Polyurethan-Prepolymer, beträgt.

6. Feuchtigkeitshärtende Polyurethanzubereitungen nach den Ansprüchen 1-5, dadurch gekennzeichnet, daß als Beschleuniger Carbonsäuren und/oder deren Anhydride in Mengen von 1-10 Gew.-%, vorzugsweise 4-6 Gew.-%, bezogen auf aldimin- und/oder ketimingruppenhaltigen Alkylalkoxysilane, eingesetzt werden.

7. Feuchtigkeitshärtende Polyurethanzubereitungen nach den Ansprüchen 1-6, dadurch gekennzeichnet, daß als mehrfunktionelle Isocyanate aliphatische und/oder aromatische Diisocyanate insbesondere Isophorondiisocyanat, lineare aliphatische Diisocyanate, Diphenylmethandiisocyanate, technisches Diphenylmethandiisocyanat, Toluylendiisocyanat oder Xylylendiisocyanat eingesetzt werden.

8. Feuchtigkeitshärtende Polyurethanzubereitungen nach den Ansprüchen 1-7, dadurch gekennzeichnet, daß als mehrfunktionelle Isocyanate Isocyanat-Prepolymere, insbesondere die Umsetzungsprodukte eines überschusses an aliphatischen und/oder aromatischen Diisocyanaten mit Alkoholen der Funktionalität 2 bis 4 eingesetzt werden.

**Claims**

1. Moisture-hardening polyurethane preparations consisting of
isocyanates having an average functionality of 2 to 4,
primers and, if desired,
accelerators, fillers, solvents, surface-active compounds and other auxiliaries,
characterized in that they contain alkyl alkoxysilanes containing aldimine and/or ketimine groups as primers.

2. Moisture-hardening polyurethane preparations as claimed in Claim 1, characterized in that the alkyl alkoxysilanes containing aldimine groups are derived from aliphatic and/or aromatic aldehydes containing from 2 to 20 and more especially from 4 to 10 C atoms.

3. Moisture-hardening polyurethane preparations as claimed in Claim 1, characterized in that the alkyl alkoxysilanes containing ketimine groups are derived from aliphatic and/or aromatic ketones containing from 3 to 14 and more especially from 6 to 12 C atoms.

4. Moisture-hardening polyurethane preparations as claimed in Claims 1 to 3, characterized in that the alkyl alkoxysilanes containing aldimine and/or ketimine groups contain the following groups on silicon : one or, if desired, two $C_2$-$C_6$ alkyl radicals substituted by at least one aldimine and/or ketimine group, if desired, an unsubstituted $C_1$-$C_{10}$ alkyl radical and two or three alkoxy groups containing from 1 to 8 and preferably from 1 to 3 C atoms.

5. Moisture-hardening polyurethane preparations as claimed in Claims 1 to 4, characterized in that the alkyl alkoxysilanes containing aldimine and/or ketimine groups are present in a quantity of from 0.1 to 8 % by weight and preferably in a quantity of from 0.2 to 2 % by weight, based on diisocyanate or polyurethane prepolymer.

6. Moisture-hardening polyurethane preparations as claimed in Claims 1 to 5, characterized in that carboxylic acids and/or anhydrides thereof are used as accelerators in quantities of from 1 to 10 % by weight and preferably in quantities of from 4 to 6 % by weight, based on alkyl alkoxy silanes containing aldimine and/or ketimine groups.

7. Moisture-hardening polyurethane preparations as claimed in Claims 1 to 6, characterized in that

the polyfunctional isocyanates used are aliphatic and/or aromatic diisocyanates, more especially isophorone diisocyanate, linear aliphatic diisocyanates, diphenyl methane diisocyanates, technical diphenyl methane diisocyanate, tolylene diisocyanate or xylylene diisocyanate.

8. Moisture-hardening polyurethane preparations as claimed in Claims 1 to 7, characterized in that isocyanate prepolymers, more especially the reaction products of an excess of aliphatic and/or aromatic diisocyanates with alcohols having a functionality of 2 to 4, are used as the polyfunctional isocyanates.

**Revendications**

1. Préparations de polyuréthane durcissant à l'humidité, consistant en
des isocyanates à fonctionnalité moyenne de 2 à 4
des promoteurs d'adhérence et éventuellement en
des accélérateurs, des matières de charge, des solvants, des composés tensioactifs et autres substances auxiliaires,
caractérisées en ce que sont contenus en tant que promoteurs d'adhérence des alcoylalcoxysilanes renfermant des groupes aldimine et/ou cétimine.

2. Préparations de polyuréthane durcissant à l'humidité selon la revendication 1, caractérisées en ce que les alcoylalcoxysilanes renfermant des groupes aldimine dérivent d'aldéhydes aliphatiques et/ou aromatiques ayant 2 à 20 atomes de carbone, en particulier 4 à 10 atomes de carbone.

3. Préparations de polyuréthane durcissant à l'humidité selon la revendication 1, caractérisées en ce que les alcoylalcoxysilanes renfermant des groupes cétimine dérivent de cétones aliphatiques et/ou aromatiques ayant 3 à 14 atomes de carbone, de préférence 6 à 12 atomes de carbone.

4. Préparations de polyuréthane durcissant à l'humidité selon les revendications 1 à 3, caractérisées en ce que les alcoylalcoxysilanes renfermant des groupes aldimine et/ou cétimine présentent sur le silicium les groupes suivants : un ou éventuellement deux radicaux alcoyle de longueur de chaîne en $C_2$-$C_6$, substitué par au moins un groupe aldimine et/ou cétimine, éventuellement un radical alcoyle non substitué ayant 1 à 10 atomes de carbone et 2 ou 3 groupes alcoxy ayant 1 à 8, de préférence 1 à 3 atomes de carbone.

5. Préparations de polyuréthane durcissant à l'humidité selon les revendications 1 à 4, caractérisées en ce que la quantité des alcoylalcoxysilanes renfermant des groupes aldimine et/ou cétimine s'élève à 0,1 à 8 % en poids, de préférence à 0,2 à 2 % en poids par rapport au diisocyanate ou prépolymère de polyuréthane.

6. Préparations de polyuréthane durcissant à l'humidité selon les revendications 1 à 5, caractérisées en ce qu'on utilise comme accélérateurs des acides carboxyliques et/ou leurs anhydrides en des quantités de 1 à 10 % en poids, de préférence de 4 à 6 % en poids par rapport aux alcoylalcoxysilanes renfermant des groupes aldimine et/ou cétimine.

7. Préparations de polyuréthane durcissant à l'humidité selon les revendications 1 à 6, caractérisées en ce qu'on utilise comme isocyanates polyfonctionnels des diisocyanates aliphatiques et/ou aromatiques, en particulier de l'isophorone-diisocyanate, des diisocyanates aliphatiques linéaires, des diphénylméthane-diisocyanates, du diphénylméthane-diisocyanate technique, du toluylène-diisocyanate ou du xylylène-diisocyanate.

8. Préparations de polyuréthane durcissant à l'humidité selon les revendications 1 à 7, caractérisées en ce qu'on utilise comme isocyanates polyfonctionnels des prépolymères isocyanatés, en particulier les produits de réaction d'un excès de diisocyanates aliphatiques et/ou aromatiques avec des alcools de fonctionnalité 2 à 4.